# EUROPÄISCHE PATENTSCHRIFT

(11) **EP 2 158 025 B1**
(45) Veröffentlichungstag und Bekanntmachung des Hinweises auf die Patenterteilung: **10.02.2016**
(21) Anmeldenummer: 08749241.9
(22) Anmeldetag: 30.04.2008
(51) Int. Cl.: B01D 63/08, B01D 65/00, B01D 61/14

(54) **FILTERKASSETTENEINHEIT**
FILTER CARTRIDGE UNIT
UNITÉ DE CARTOUCHE FILTRANTE

(30) Priorität: 31.05.2007 DE 102007025541
(43) Veröffentlichungstag der Anmeldung: 03.03.2010
(73) Patentinhaber: Sartorius Stedim Biotech GmbH, 37079 Göttingen (DE)
(72) Erfinder: REIF, Oscar-Werner, 30173 Hannover (DE); GRUMMERT, Ulrich, 37242 Bad Sooden-Allendorf (DE); OPPERMANN, Frank, 37077 Göttingen (DE)
(74) Vertreter: Schneider, Peter Christian
(86) Internationale Anmeldenummer: PCT/EP2008/003493
(87) Internationale Veröffentlichungsnummer: WO 2008/145241

(56) Entgegenhaltungen:
- DE-A1- 3 127 548
- DE-U- 6 801 138
- GB-A- 1 224 887
- US-A- 3 864 265
- US-A- 3 880 627
- US-A- 4 849 102

## Beschreibung

### Gebiet der Erfindung

Die Erfindung betrifft eine Filterkassetteneinheit mit einer ersten Endplatte und mindestens einer zweiten Endplatte und einer zwischen den Endplatten angeordneten Filterkassette, wobei die Filterkassette mit ihren benachbarten Endplatten in einem umlaufenden Teilbereich ihrer Anlageflächen durch einen Kleber formschlüssig und fluiddicht verbunden ist.

### Stand der Technik

Filterkassetteneinheiten werden beispielsweise in der Ultrafiltration und in der Microfiltration von Flüssigkeiten eingesetzt. Filterkassetten oder Membrankassetten werden dabei in der Regel einer Verteilerplatte benachbart und mithilfe eines Filterhalters zwischen zwei Einspannplatten bzw. Endplatten eingespannt und zusammengepresst. Die Verteilerplatte weist dabei Anschlüsse für das zu filtrierende Medium und Anschlüsse für das Filtrat bzw. Permeat sowie bei der Crossflowfiltration Anschlüsse für das Retentat bzw. Konzentrat auf. Zur Verbindung mit den hintereinander schaltbaren bzw. stapelbaren Filterkassetten weist die Verteilerplatte in ihrem Inneren Kanäle auf, die mit den Anschlüssen verbunden sind.

Solche Filterkassetteneinheiten sind beispielsweise aus der DE 34 41 249 C2, DE 44 32 627 A1 oder der DE 100 00 186 C2 bekannt.

Nachteilig bei den bekannten Filtereinheiten, die sich grundsätzlich bewährt haben, ist, dass nach Gebrauch die Filterkassetteneinheit demontiert und die Filterkassette entnommen werden muss. Dabei kann es zu einer unerwünschten Kontamination der Endplatten, Verteilerplatten oder anderen Teilen der Umgebung kommen.

Nachteilig bei den bekannten, als Mehrwegvorrichtungen konzipierten Filtereinheiten ist weiterhin, dass aufwendige Reinigüngs- und Validierungsschritte erforderlich sind, um Kreuzkontaminationen auszuschließen, wenn der Anwender mit einer Filtereinheit sukzessiv verschiedene Medien filtriert.

Aus der US 5,429,742 ist es bekannt, dass Filterkassetten mit den Endplatten verklebt werden können. Nähere Ausführungen zu der Klebeverbindung sind der US 5,429,742 jedoch nicht zu entnehmen.

Aus der DE 68 01 138 U ist es bekannt, Filter bzw. Membranen zu stapeln und den Stapel durch Endplatten zusammenzuhalten. Zu diesem Zweck weisen die Membranen, die zwischen den Membranen angeordneten Platten und die Endplatten Löcher auf, die durch die Stapelung Kanäle bilden, die mit einem aushärtenden Kunststoffkleber ausgegossen werden können.

Aus der US 4,882,050 sind ebenfalls übereinander geschichtete Filterplatten bekannt, die über Endplatten miteinander verspannt werden. Dabei ist es bekannt, zur lagerichtigen Montage an den Endplatten hervorstehende Elemente, die in korrespondierende Aussparungen der Filterplatten eingreifen, entweder anzuformen oder durch Kleben zu befestigen.

Aus der DE 31 27 548 C2 ist ebenfalls eine Filterkassetteneinheit bekannt, bei der übereinander gestapelte Trägerplatten und Membranfilter in Stapelrichtung Durchbrechungen aufweisen, die mit Kleber bzw. Kunstharz aufgefüllt werden. Die Endplatten sind in bekannter Weise über durch Bolzenlöcher geführte Spannelemente miteinander verspannt.

Aus der US 4,849,102 ist eine Filterkassetteneinheit mit einer zwischen zwei Filterkassetten angeordneten Verteilerplatte bekannt, wobei die Filterkassetten zwischen zwei Endplatten eingespannt sind.

Aus der US 3,864,265 A ist eine Filtereinheit bekannt, die ein zweiteiliges Gehäuse aufweist, zwischen dessen Gehäuseenden ein Filterelement angeordnet ist. Der zwischen Gehäuse und Filterelement bestehende Zwischenraum ist vollständig mit einer Vergussmasse vergossen. Die Verbindung der beiden Gehäusehälften erfolgt durch Verkleben zweier umlaufender Bünde bzw. Flansche oder Klammern, Ultraschallschweißen oder thermisches Schweißen.

Die bekannte Filtereinheit weist keine Endplatten auf, zwischen denen die Filterkassetteneinheit angeordnet bzw. eingespannt ist.

Aus der US 3,880;627 A ist eine Filtereinheit bekannt, die ein Filterelement aufweist, das ganzseitig von einem Gehäuse umgeben ist. Das Gehäuse besteht dabei aus einem Paar von Gehäuseteilen. Jedes Gehäuseteil weist eine im Wesentlichen U-förmige Formgebung auf, welche im Abstand voneinander angeordnete, parallele, wandartige Flanschteile schafft und Verbindungsbereiche, die die Flanschteile miteinander verbinden. Gegenüberliegende Wandteile sind jeweils mit Umfangsflanschen ausgerüstet, die den Wandteilen eine haubenförmige Gestaltung geben. Dadurch werden die Gehäuseteile in ihrem zusammengebauten Zustand festgelegt. In die Wandteile wird Klebstoff eingebracht, in den die Enden des Filterelementes und der Gehäuseteile eingebettet werden.

Diese bekannte Filtereinheit weist keine Filterkassette auf, die zwischen zwei Endplatten angeordnet bzw. eingespannt ist.

Aus der GB 1 224 887 A ist eine Filtereinheit bekannt, deren Filtereinsatz 22 vollständig von einem Gehäuse umschlossen ist, das von zwei becherförmigen Gehäuseteilen gebildet wird. Jedes Gehäuseteil endet in einem seitlich vorstehenden Flansch 15, mit dem sie aneinander stoßen. Die beiden Gehäuseteile 11 bilden im Bereich ihrer Flansche eine nur von innen her zugängliche Tasche 17. Die von den Flanschen 15 gebildeten Bunde 18 werden von einer klammerartigen Gürtelumspritzung 19 umfasst.

Auch diese bekannte Filtereinheit weist keine Filterkassette auf, die zwischen zwei Endplatten angeordnet bzw. eingespannt ist.

### Aufgabenstellung

Aufgabe der vorliegenden Erfindung ist es daher, die bekannten Filterkassetteneinheiten so zu verbessern, dass eine einfache kontaminationsfreie Handhabung gewährleistet ist. Dabei soll eine zuverlässige und fluiddichte Verbindung zwischen den Endplatten und der Filterkassette erreicht werden.

### Darstellung der Erfindung

Diese Aufgabe wird in Verbindung mit dem Oberbegriff des Anspruches 1 dadurch gelöst, dass die Endplatten in einem zu dem umlaufenden Teilbereich korrespondierenden Teilbereich eine hinterschnittene Nut aufweisen, die von dem mit der Filterkassette verbundenen Kleber ausgefüllt ist, dass mindestens eine der Endplatten als Verteilerplatte ausgebildet ist und über Kanäle und Flussöffnungen für die Zuführung von zu filtrierendem Fluid und für die Abführung von Konzentrat und Filtrat verfügt.

Durch die Hinterschneidung der Nut wird nach Aushärten des Klebers eine zuverlässige formschlüssige und fluiddichte Verbindung zwischen den Endplatten und der Filterkassette erreicht. Die formschlüssige und fluiddichte Verbindung der Filterkassette mit ihren benachbarten Endplatten kommt ohne eine aufwendige Montage bzw. Demontage aus und vermeidet die insbesondere mit der Demontage verbundenen Kontaminationen der Umgebung. Gleichzeitig ist es möglich, die Filterkassetteneinheit so kostengünstig zu fertigen, dass sie für den Einmalgebrauch geeignet ist. Die Filterkassetteneinheit kann dabei als Einheit konserviert oder steril und gebrauchsfertig verpackt sein.

Nach einer bevorzugten Ausführungsform der Erfindung ist der Kleber aus Vergussmasse der Filterkassette gebildet. Dadurch wird eine feste und sichere Bindung zu der Vergussmasse erreicht, die die Filterkassette seitlich und auf den Rand der Anlageflächen übergreifend in dem umlaufenden Teilbereich umgibt.

Die Filterkassetten weisen mindestens ein Filterelement auf. Vorzugsweise sind dabei eine Mehrzahl von Filterelementen so übereinander gestapelt und mit Kanälen versehen, dass die Filterkassetten in bekannter Weise Dead-End- oder Crossflow-Filter-Kassetten bilden.

Nach einer weiteren bevorzugten Ausführungsform der Erfindung ist die Filterkassetteneinheit ausschließlich aus organischen Polymermaterialien ausgebildet.

Die komplette Ausbildung aus organischen Polymermaterialien erleichtert die Handhabung der Filterkassetteneinheit sowohl im Gebrauch als auch bei der Entsorgung.

Zur leichteren Handhabung ist die Verteilerplatte mit Fluidanschlussadaptern ausgerüstet.

Gemäß einer weiteren bevorzugten Ausführungsform der Erfindung ist die Filterkassetteneinheit von einer gas- und flüssigkeitsdichten Verpackung eingeschlossen, wobei die Filterkassetteneinheit in der Verpackung über ein abtrennbares gasdurchlässiges Fenster zum Beispiel mit Dampf oder Ethylenoxid sterilisiert wurde. Dies ermöglicht eine sterile Lagerung und eine sichere Handhabung der Filterkassetteneinheit. Als Verpackung ist dabei ein gas- und flüssigkeitsdichter Folienbeutel geeignet, der ein Fenster aus Tyvek® der Fa. DuPont aufweist, das zum Beispiel für Heißdampf durchlässig ist. Nach dem Sterilisieren wird der Folienbeutel zwischen der Filtereinheit und dem Tyvek-Fenster mit einer Schweißnaht versehen, die ein unerwünschtes Austrocknen der Filtereinheit verhindert. Der Bereich mit dem Tyvek-Fenster kann zum Beispiel nach der Dampfsterilisation abgetrennt werden.

Die erfindungsgemäße Filterkassetteneinheit ist ohne Einspannung in einen Filterhalter bzw. in Spannplatten zur Filtration verwendbar. Bei entsprechender Wahl der Vergussmasse, die die Filterkassette seitlich und auf den Rand der Anlageflächen übergreifend in dem umlaufenden Teilbereich der End- bzw. Verteilerplatten umgibt, ist nicht nur eine fluiddichte Verbindung zwischen Filterkassette und End- bzw. Verteilerplatten herstellbar. Durch das Einbringen der Vergussmasse in eine vorgespannte Filterkassetteneinheit ist darüber hinaus die erfindungsgemäße Vorrichtung ohne sonst übliche Spannplatten betreibbar.

Weitere Einzelheiten der Erfindung ergeben sich aus der nachfolgenden ausführlichen Beschreibung und den beigefügten Zeichnungen, in denen bevorzugte Ausführungsformen der Erfindung beispielhaft veranschaulicht sind.

### Kurzbeschreibung der Zeichnungen

In den Zeichnungen zeigen:
- Figur 1:: eine räumliche Darstellung einer Filterkassetteneinheit,
- Figur 2:: eine räumliche Darstellung der als Verteilerplatte ausgebildeten ersten Endplatte von Figur 1,
- Figur 3:: eine vergrößerte Darstellung der Filterkassetteneinheit von Figur 1 entlang der Linie III - III geschnitten,
- Figur 4:: eine vergrößerte Darstellung der ersten Endplatte von Figur 3 im Schnitt,
- Figur 5:: eine räumliche Darstellung der ersten Endplatte mit Filterkassette der Filterkassetteneinheit von Figur 1 und

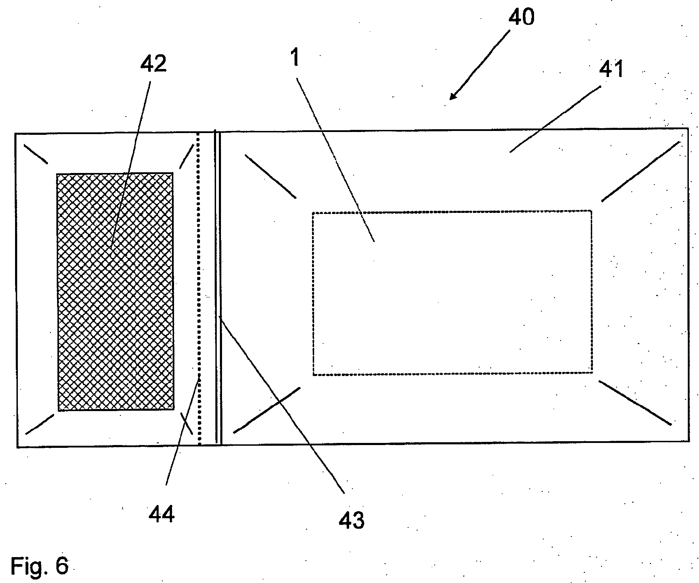

- Figur 6:: eine verkleinerte Draufsicht auf eine als Folienbeutel ausgebildete Verpackung mit gestrichelt angedeuteter Filterkassetteneinheit.

### Beschreibung der Ausführungsbeispiele

Eine Filterkassetteneinheit 1 besteht im Wesentlichen aus einer Filterkassette 2 und der Filterkassette 2 benachbarten Endplatten 3, 4.

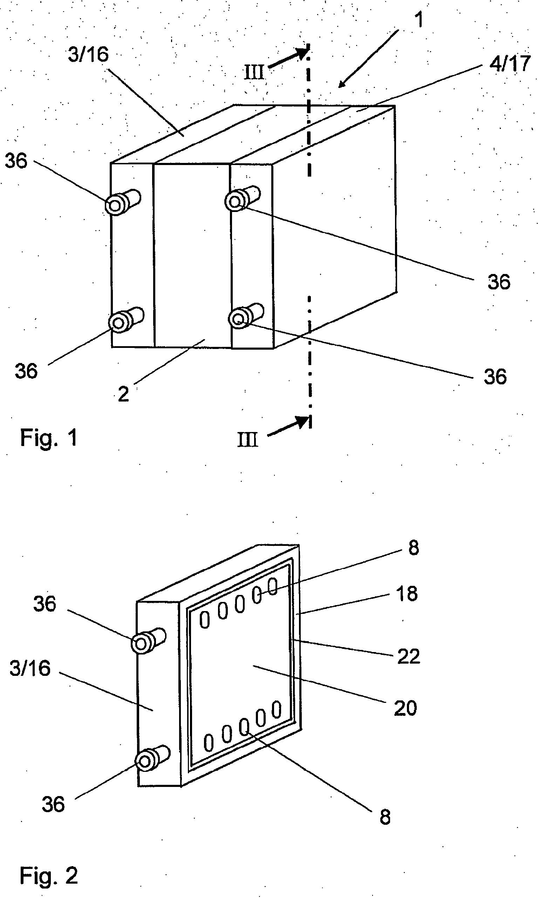

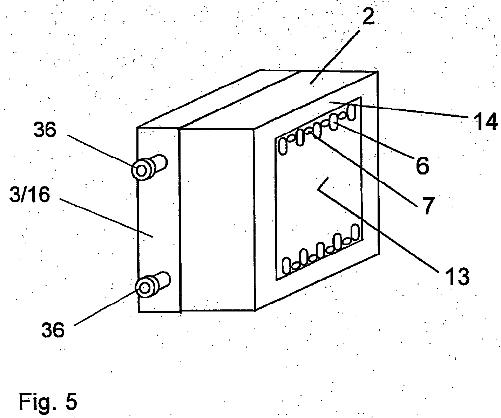

Die an sich bekannte Filterkassette 2 besteht aus einer Mehrzahl von übereinander gestapelten Filterelementen 5, die im Beispiel an ihren gegenüberliegenden Längsrändern Flussöffnungen 6, 7 aufweisen, die mit Flussöffnungen 8, 9 in den Endplatten 3, 4 korrespondieren. Die Filterkassetten 2 der Ausführungsbeispiele von Figur 1 und von Figur 5 sind in, bekannter Weise als Crossflow-Filter-Kassetten ausgebildet. Die Filterkassette 2 ist an ihren Seitenrändern mit einer Vergussmasse 10 vergossen, die die Ränder der den Endplatten 3, 4 zugewandten Anlageflächen 12, 13 in einem umlaufenden Teilbereich 14, 15 übergreift.

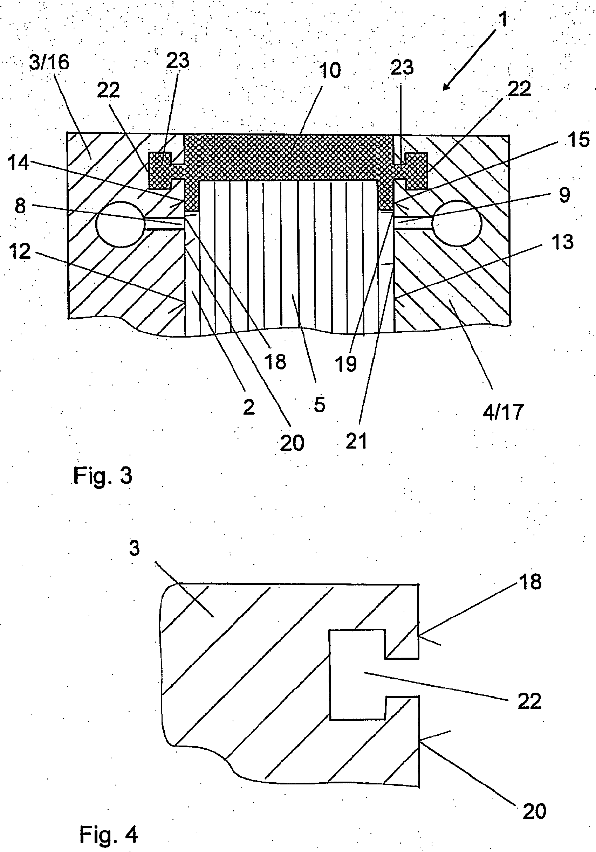

In dem Ausführungsbeispiel der Figuren 1 bis 3 sind die Endplatten 3, 4 als Verteilerplatten 16, 17 ausgebildet. Über die erste Verteilerplatte 16, die die erste Endplatte 3 bildet, wird das gesammelte Retentat abgeführt, während über die zweite Verteilerplatte 17, die die zweite Endplatte 4 bildet, das Permeat bzw. Filtrat abgeführt wird.

In einem zum umlaufenden Teilbereich 14, 15 der Anlageflächen 12, 13 korrespondierende Teilbereich 18, 19 der Endplatten 3, 4 weisen die Endplatten 3, 4 an ihren Anlageflächen 20, 21 eine hinterschnittene Nut 22 auf, die beispielsweise T-förmig ausgebildet ist. Die hinterschnittene Nut 22 ist mit Kleber 23 ausgefüllt, der mit der Vergussmasse 10 in dem umlaufenden Teilbereich 14, 15 der Anlageflächen 12, 13 verbunden ist. Im Beispiel wird der Kleber 23 aus der Vergussmasse 10 der Filterkassette 2 gebildet.

Die Filterkassetteneinheit 1 kann ein einer gas- und flüssigkeitsdichten Verpackung 40 gelagert werden. Die Filterkassetteheihneit 1wird in die Verpackung 40, die als Folienbeutel 41 ausgebildet ist, eingebracht und an den äußeren Rändern verschweißt. Der Folienbeutel 41 weist zu seinem Innenraum hin ein Fenster 42 aus Tyvek® der Fa. DuPont auf. Dieses Fenster 42 ermöglicht es, dass die Filterkassetteneinheit 1 in dem Folienbeutel 41 autoklaviert, also mit Heißdampf sterilisiert werden kann. Um ein anschließendes Austrocknen der Filterkassetteneinheit bzw. der Filterkassetten 2 zu verhindern, wird zwischen dem Fenster 42 und der Filterkassetteneinheit 1 eine Schweißnaht 43 gesetzt, die den die Filterkassetteneinheit umgebenden Beutelinnenraum gegenüber dem Fenster 42 abdichtet. Entlang einer Trennlinie 44 kann der nicht mehr benötigte Teil des Folienbeutels, der das Fenster 42 aufweist, abgetrennt werden.

## Patentansprüche

1. Filterkassetteneinheit mit einer ersten Endplatte (3) und mindestens einer zweiten Endplatte (4) und einer zwischen den Endplatten (3, 4) angeordneten Filterkassette (2),
wobei die Filterkassette (2) mit ihren benachbarten Endplatten (3, 4) in einem umlaufenden Teilbereich (14, 15) ihrer Anlageflächen (12, 13) durch einen Kleber (23) formschlüssig und flüiddicht verbunden ist, wobei die Filterkassette (2) als Crossflow-Filterkassette ausgebildet ist,
**dadurch gekennzeichnet,**
**dass** die Endplatten (3, 4) in einem zu dem umlaufenden Teilbereich (14, 15) korrespondierenden Teilbereich (18, 19) eine hinterschnittene Nut (22) aufweisen, die von dem mit der Filterkassette (2) verbundenen Kleber (23) ausgefüllt ist,
**dass** mindestens eine der Endplatten (3, 4) als Verteilerplatte (16, 17) ausgebildet ist und über Kanäle und Flussöffnungen (8, 9) für die Zuführung von zu filtrierendem Fluid und für die Abführung von Konzentrat und Filtrat verfügt.

2. Filterkassetteneinheit nach Anspruch 1,
**dadurch gekennzeichnet,**
**dass** der Kleber (23) aus Vergussmasse (10) der Filterkassette(2) gebildet ist.

3. Filterkassetteneinheit nach einem der Ansprüche 1 bis 2,
**dadurch gekennzeichnet,**
**dass** die Filterkassetteneinheit (1, 1', 1") ausschließlich aus organischen Polymermaterialien ausgebildet ist.

4. Filterkassetteneinheit nach einem der Ansprüche 1 bis 3,
**dadurch gekennzeichnet,**
**dass** die Verteilerplatte (16, 17) mit Fluidanschlussadaptern (36) ausgerüstet ist.

5. Filterkassetteneinheit nach einem der Ansprüche 1 bis 4,
**dadurch gekennzeichnet,**
**dass** die Filterkassetteneinheit (1) sterilisiert und von einer gas- und flüssigkeitsdichten Verpackung (40) eingeschlossen ist.

## Claims

1. Filter cartridge unit having a first end plate (3) and at least one second end plate (4) and a filter cartridge (2) arranged between the end plates (3, 4),
where the filter cartridge (2) is connected with its adjacent end plates (3, 4) in a positive and fluid-tight manner by an adhesive (23) in a circumferential subarea (14, 15) of its contact surfaces (12, 13), with the filter cartridge (2) being configured as a cross-flow filter cartridge,
**characterized in that**
the end plates (3, 4) possess an undercut slot (22) in a subarea (18, 19) corresponding to the subarea (14, 15), said slot being filled by the adhesive (23) connected to the filter cartridge (2),
and **in that** at least one of the end plates (3, 4) is designed as a distribution plate (16, 17) and is provided with channels and flow openings (8, 9) for supplying fluid to be filtered and for removing concentrate and filtrate.

2. Filter cartridge unit according to Claim 1,
**characterized in that**
the adhesive (23) consists of casting material (10) of the filter cartridge (2).

3. Filter cartridge unit according to either of the Claims 1 to 2,
**characterized in that**
the filter cartridge unit (1) is made exclusively of organic polymer materials.

4. Filter cartridge unit according to any of the Claims 1 to 3,
**characterized in that**
the distribution plate (16, 17) is equipped with fluid connection adapters (36).

5. Filter cartridge unit according to any of the Claims 1 to 4,
**characterized in that**
the filter cartridge unit (1) is sterilized and enclosed by a gas-tight and fluid-tight packaging (40).

## Revendications

1. Unité de cartouche filtrante comportant une première plaque terminale (3) et au moins une deuxième plaque terminale (4), ainsi qu'une cartouche filtrante (2) disposée entre les plaques terminales (3, 4),
sachant que la cartouche filtrante (2) est, dans une zone partielle périphérique (14, 15) de ses surfaces de contact (12, 13), reliée à ses plaques terminales adjacentes (3, 4) par complémentarité de forme et de manière étanche aux fluides par un adhésif (23), sachant que la cartouche filtrante (2) est réalisée sous la forme d'une cartouche filtrante à filtration tangentielle,
**caractérisée**
**en ce que** les plaques terminales (3, 4) présentent, dans une zone partielle (18, 19) correspondant à la zone partielle périphérique (14, 15), une rainure contre-dépouillée (22) qui est rempli par l'adhésif (23) relié à la cartouche filtrante (2),
**en ce qu'**au moins une des plaques terminales (3, 4) est réalisée sous la forme d'une plaque de distribution (16, 17) et dispose de canaux et d'ouvertures d'écoulement (8, 9) pour l'alimentation du fluide à filtrer et pour l'évacuation du concentré et du filtrat.

2. Unité de cartouche filtrante selon la revendication 1,
**caractérisée**
**en ce que** l'adhésif (23) est formé par la masse de scellement (10) de la cartouche filtrante (2).

3. Unité de cartouche filtrante selon l'une des revendications 1 à 2,
**caractérisée**
**en ce que** l'unité de cartouche filtrante (1) est exclusivement constituée de matériaux polymères organiques.

4. Unité de cartouche filtrante selon l'une des revendications 1 à 3,
**caractérisée**
**en ce que** la plaque de distribution (16, 17) est équipée d'adaptateurs (36) de branchement de fluide.

5. Unité de cartouche filtrante selon l'une des revendications 1 à 4,
**caractérisée**
**en ce que** l'unité de cartouche filtrante (1) est stérilisée et est enfermée dans un emballage (40) étanche aux gaz et aux fluides.
